# EUROPÄISCHE PATENTSCHRIFT

(11) **EP 0 992 099 B1**
(45) Veröffentlichungstag und Bekanntmachung des Hinweises auf die Patenterteilung: **02.07.2008**
(21) Anmeldenummer: 99922036.1
(22) Anmeldetag: 18.03.1999
(51) Int. Cl.: H02H 9/04, H03K 17/082

(54) **VERFAHREN UND VORRICHTUNG ZUM ABBAU VON ÜBERSPANNUNGEN**
METHOD AND DEVICE FOR SUPPRESSING OVER-VOLTAGES
PROCEDE ET DISPOSITIF POUR SUPPRIMER DES SURTENSIONS

(30) Priorität: 09.04.1998 DE 19815983
(43) Veröffentlichungstag der Anmeldung: 12.04.2000
(73) Patentinhaber: ROBERT BOSCH GMBH, 70442 Stuttgart (DE)
(72) Erfinder: SEUBERT, Bernhard, D-97900 Külsheim (DE)
(86) Internationale Anmeldenummer: PCT/DE1999/000749
(87) Internationale Veröffentlichungsnummer: WO 1999/053591

(56) Entgegenhaltungen:
- EP-A- 0 179 194
- DE-C- 4 432 520

## Beschreibung

### Stand der Technik

Die Erfindung betrifft ein Verfahren und eine Vorrichtung zum Abbau von Überspannungen gemäß den Oberbegriffen der unabhängigen Ansprüche.

Ein Verfahren und eine Vorrichtung zum Abbau von Überspannungen sind aus der DE-OS 44 33 045 bekannt. Dort wird eine Schutzdiode verwendet. Solche Schutzdioden oder ähnliche Schutzbausteine sind in der Regel sehr teuer.

### Aufgabe der Erfindung

Der Erfindung liegt die Aufgabe zugrunde, bei einem Verfahren und einer Vorrichtung zum Abbau von Überspannungen teure Schutzdioden oder Schutzbausteine einzusparen.

Diese Aufgabe wird durch die in den unabhängigen Ansprüchen gekennzeichneten Merkmale gelöst.

### Vorteile der Erfindung

Mit der erfindungsgemäßen Vorrichtung und dem erfindungsgemäßen Verfahren können teure Schutzbausteine eingespart werden, da bereits vorhandene Elemente verwendet werden.

### Zeichnung

Die Erfindung wird nachstehend anhand der in der Zeichnung dargestellten Ausführungsformen erläutert. Es zeigen Figur 1 ein Prinzipschaltbild der erfindungsgemäßen Vorrichtung, Figur 2 eine detailliertere Darstellung der erfindungsgemäßen Vorrichtung, Figur 3 verschiedene über der Zeit t aufgetragene Signale und Figur 4 ein Flußdiagramm einer vorteilhaften Ausführungsform.

### Beschreibung der Ausführungsbeispiele

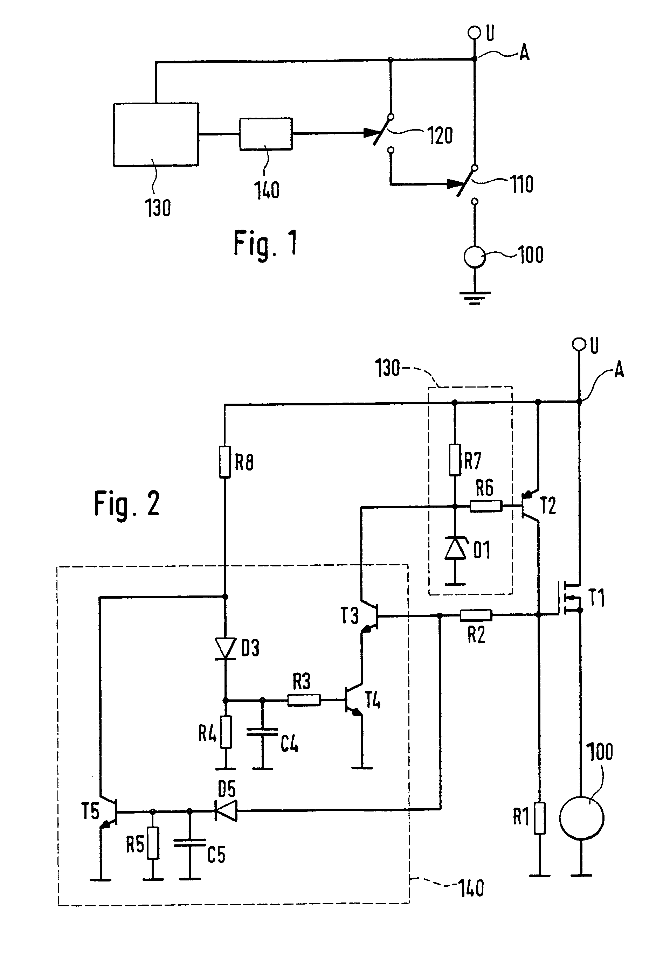

In Figur 1 ist die erfindungsgemäße Vorrichtung grob schematisch dargestellt. Mit 100 ist ein Verbraucher bezeichnet, der über ein erstes Schaltmittel 110 mit einem Verbindungspunkt A und einer Spannung U in Verbindung steht. Der zweite Anschluß des Verbrauchers 100 steht mit Masse in Verbindung. Durch Ansteuern des ersten Schaltmittels 110 kann der Verbraucher 100 mit der Spannung U beaufschlagt werden. Bei dem Verbraucher 100 handelt es sich vorzugsweise um einen induktiven oder einen kapazitiven Verbraucher, wie beispielsweise einen Elektromotor oder ein Magnetventil. Solche Elektromotoren werden beispielsweise in Kraftfahrzeugen zum Antrieb von Pumpen, zur Förderung von Hydraulikflüssigkeiten in Bremssystemen eingesetzt. Induktive und kapazitive Verbraucher eignen sich besonders gut, da eine kurzfristige Beaufschlagung mit Spannung nicht unmittelbar zum Ansprechen des Verbrauchers führt.

Das erste Schaltmittel 110 wird von einem zweiten Schaltmittel 120 mit einem Ansteuersignal beaufschlagt. Hierzu ist der Steuereingang des ersten Schaltmittels 110 über das zweite Schaltmittel 120 mit der Spannung U verbindbar. Die Spannung U wird ferner einer Überwachung 130 zugeführt, die über eine Verzögerung 140 das zweite Schaltmittel 120 mit einem Ansteuersignal beaufschlagt.

In Kraftfahrzeugen, in denen diese Schaltung vorzugsweise eingesetzt wird, treten sehr häufig Überspannung auf. Dies bedeutet, die Spannung U am Punkt A nimmt einen Wert an, der wesentlich über dem üblichen Wert von beispielsweise 12 Volt liegt. Solche Überspannungen werden üblicherweise als Load Dump Impuls bezeichnet. Diese Überspannungen können zur Zerstörung von Bauteilen insbesondere elektronischen Bauteilen führen.

Erfindungsgemäß wird ein solcher Load Dump Impuls von der Überwachung 130 durch Auswerten der Spannung U am Punkt A sensiert. Die Spannung U wird im folgenden auch als zu überwachende Spannung bezeichnet. Ab einer Grenzspannung, die beispielsweise bei 30 Volt liegt, wird der Verbraucher 100 mittels des ersten Schaltmittels 110 eingeschaltet. Der Stromfluß durch den Verbraucher wird freigegeben, wenn die an der Spannungsquelle anliegende Spannung U einen Schwellwert übersteigt.

Der Load Dump Impuls wird durch ein aktives Einschalten des ersten Schaltmittels abgebaut. Die Energie des Load Dump Impulses wird dadurch zum wesentlichen Teil vom Verbraucher aufgenommen. Das Ansteuersignal zur Betätigung des ersten Schaltmittels wird nach einer Wartezeit wieder zurückgenommen. Der Stromfluß durch den Verbraucher wird nach Ablauf einer Wartezeit unterbunden.

Der Verbraucher 100 ist vorzugsweise als Pumpe insbesondere als Rückförderpumpe eines ABS, ASR und/oder FDR-Systems ausgebildet. Diese Pumpe fördert eine Hydraulikflüssigkeit im Hydraulikkreis eines die Bremswirkung des Kraftfahrzeugs beeinflussenden Systems. Besonders vorteilhaft ist es, wenn diese die Hydraulikflüssigkeit in einen Speicher oder einen Vorratsbehälter fördert.

Die Verwendung der Rückförderpumpe als Verbraucher zum Abbau des Load Dump Impulses ist vorteilhaft, da die Rückförderpumpe durch die kurzfristige Überspannung nicht beschädigt wird. In der Regel führt der Load Dump Impuls nicht zum Anlauf der Pumpe und zur Förderung von Hydraulikflüssigkeit. Alternativ zur Rückförderpumpe können auch andere Verbraucher eingesetzt werden, die eine kurzfristige höhere Spannung als die Versorgungsspannung unbeschadet überstehen und/oder bei denen eine kurzfristige Beaufschlagung mit einer solchen Spannung nicht zu einer Reaktion, sprich zu einem Lauf der Pumpe oder einem Schalten bei einem Magnetventil führt.

In Figur 2 ist die Überwachung und die Verzögerung detaillierter dargestellt. Bereits in Figur 1 dargestellte Elemente sind mit entsprechenden Bezugszeichen bezeichnet. Das Schaltmittel 110 ist in Figur 2 als Transistor T1 bezeichnet. Der Transistor T1 ist vorzugsweise als Feldeffekttransistor ausgebildet. Das Gate des Transistors T1 steht über einen ersten Widerstand R1 mit Masse und über die Emitterkollektorstrecke eines PNP-Transistors T2 mit dem Punkt A in Verbindung. Dieser Transistor T2 entspricht dem zweiten Schaltmittel 120 bei der Figur 1.

Die Basis des zweiten Transistors T2 steht über die Reihenschaltung der Widerstände R6 und R7 ebenfalls mit dem Punkt A in Kontakt. Der Verbindungspunkt zwischen dem Widerstand R6 und dem Widerstand R7 steht über eine Diode D1 mit Masse in Verbindung. Die Diode D1 ist vorzugsweise als Zenerdiode ausgebildet, wobei die Anode der Diode mit Masse in Verbindung steht.

Bei dem dargestellten Ausführungsbeispiel entspricht die Zenerspannung der Zenerdiode D1 der Grenzspannung, bei der die Rückförderpumpe mit Spannung beaufschlagt wird.

Der Verbindungspunkt zwischen dem Widerstand R6 und dem Widerstand R7 steht ferner über die Reihenschaltung zweier Transistoren T3 und T4 mit Masse in Kontakt. Die Basis des Transistors T3 steht über einen Widerstand R2 mit dem Gateanschluß des Transistors T1 in Verbindung. Die Basis des Transistors T4 steht über ein RC-Netzwerk bestehend aus den Widerständen R3, R4 und dem Kondensator C4 sowie über eine Diode D3 und einen Widerstand R8 mit dem Punkt A in Kontakt.

Dabei steht die Basis über den Widerstand R3, die Diode D3 und den Widerstand R8 unmittelbar mit dem Punkt A in Kontakt. Der Verbindungspunkt zwischen der Diode D3 und dem Widerstand R3 steht über die Parallelschaltung des Kondensators C4 und des Widerstands R4 mit Masse in Verbindung. Die Diode D3 steht mit ihrer Kathode mit dem Widerstand R4 und R3 in Verbindung.

Der Verbindungspunkt zwischen dem Widerstand R8 und der Diode D3 steht über einen Transistor T5 mit Masse in Verbindung. Die Basis des Transistors T5 steht über eine Parallelschaltung eines Widerstandes R5 und eines Kondensators C5, ebenfalls mit Masse in Verbindung.

Ferner steht die Basis des Transistors T5 über eine Diode D5 mit der Basis des Transistors T3 in Kontakt. Dabei ist die Anode der Diode D5 mit der Basis des Transistors T3 verbunden.

Die Transistoren T3, T4 und T5 sind vorzugsweise als NPN-Transistoren ausgebildet. Bei der Wahl anderer Transistoren und Schaltmittel sind diese entsprechend zu beschalten.

Tritt am Punkt A eine Überspannung auf, wird mittels des Transistors T3 der Transistor T2 und somit der Transistor T1 eingeschaltet. Die Energie des Load Dump Impulses wird durch das Schalten vom Motor aufgenommen. Somit wird die Überspannung des Impulses nicht nur begrenzt, sondern durch den Anlauf des Motors völlig abgebaut.

Durch die Transistoren T4 und T5 mit den entsprechenden RC-Gliedern, die als Verzögerung wirkten, wird der Schalter T1 zeitverzögert abgeschaltet.

Die Schaltung kann teilweise oder vollständig auch als integrierte Schaltung ausgebildet werden. In diesem Fall wird die Funktion der Elemente 140, 130 und des Transistors T2 von der integrierten Schaltung übernommen. Ein erstes Zeitglied gewährleistet, daß der Stromfluß durch den Verbraucher nach Ablauf einer ersten Wartezeit unterbunden wird. Bei der Ausführungsform der Figur 2 bilden das RC-Glied, bestehend aus dem Widerstand R3 und dem Kondensator C4, das erste Zeitglied. Die erste Wartezeit bzw. das erste Zeitglied ist so ausgebildet, daß die Ansteuerung so kurz ist, daß der Verbraucher nicht anspricht. Ein zweites Zeitglied gewährleistet, daß die erste Wartezeit erst nach Ablauf einer zweiten Wartezeit abzulaufen beginnt. Bei der Ausführungsform der Figur 2 bilden das RC-Glied, bestehend aus dem Widerstand R5 und dem Kondensator C5, das zweite Zeitglied. Insbesondere die Zeitglieder können als Logikbaustein ausgebildet sein. Vorzugsweise sind alle Elemente mit Ausnahme des Verbrauchers 100 und des Schaltmittel T1 auf einem Bauteil integriert.

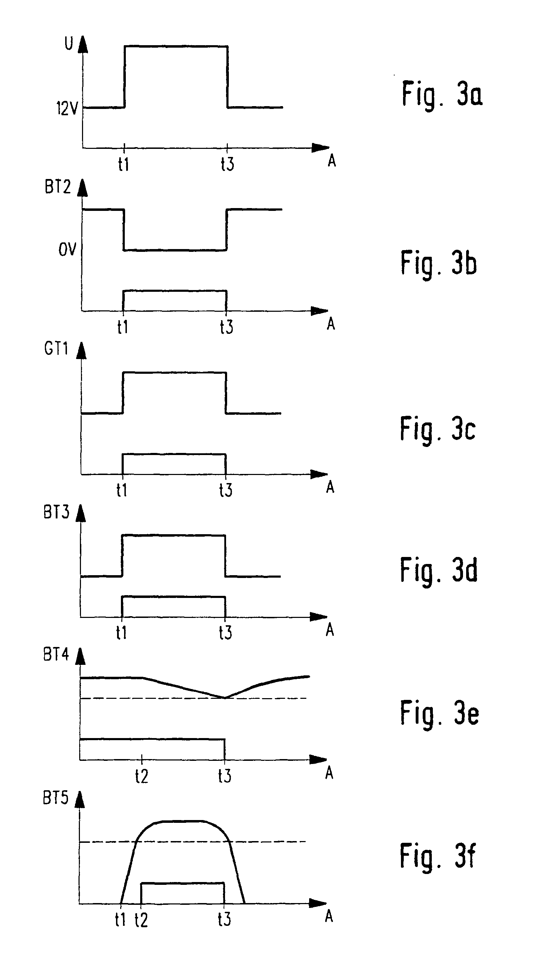

Anhand der Figur 3 wird die Funktionsweise der Schaltung gemäß Figur 2 näher erläutert. In Teilfigur 3a ist die Spannung U am Punkt A aufgetragen. In Teilfigur 3b ist die Spannung BT2 an der Basis des Transistors T2 und der Schaltzustand des Transistors T2 aufgetragen. In Teilfigur 3c ist die Spannung GT1 am Gate des Transistors T1 und der Schaltzustand des Transistors T1 dargestellt. In den Teilfiguren 3d, 3e und 3f ist jeweils die Spannung BT3, BT4 und BT5 an der Basis der Transistoren T3, T4 und T5 sowie die Schaltzustände der Transistoren T3, T4 und T5 aufgezeichnet.

Im Normalzustand liegt am Punkt A eine Spannung von ca. 12 Volt an. Dies bedeutet, der Basisanschluß des Transistors T2 liegt ebenfalls an einer Spannung von 12 Volt. Dies bedeutet, der Transistor T2 ist in seinem gesperrten Zustand. Befindet sich der Transistor T2 in seinem gesperrten Zustand, so liegt am Gateanschluß des Transistors T1 eine Spannung von 0 Volt. Dies hat zur Folge, daß der Transistor T1 sperrt. An der Basis des Transistors T3 liegt ebenfalls eine Spannung von 0 Volt an. Dies bewirkt, daß der Transistor T3 ebenfalls sperrt. Über den Spannungsteiler R8 und R4 wird der Kondensator C4 aufgeladen, und die Spannung BT4 an der Basis des Transistors T4 nimmt einen Wert deutlich größer 0 an. Dies führt dazu, daß der Transistor T4 leitet. Der Kondensator C5 ist entladen und damit liegt an der Basis des Transistors T5 eine Spannung BT5 an, die den Wert 0 annimmt und der Transistor T5 sperrt.

Zum Zeitpunkt t1 steigt die Spannung am Punkt A auf einen Wert an, der deutlich über 30 Volt liegt. Übersteigt die Spannung am Punkt A die Zenerspannung der Diode D1, so führt dies dazu, daß an der Basis der Emitterstrecke des Transistors T2 die Spannung auf Werte größer 0 Volt abfällt und der vorzugsweise als PNP Transistor ausgebildete Transistor T2 leitend wird.

Der Transistor T2 verbindet somit den Gateanschluß des Transistors T1 mit dem Punkt A was zur Folge hat, daß der Gateanschluß des Transistors T1 auf hohem Potential liegt und der Transistor T1 leitet. Dies führt zu einem Stromfluß durch den Verbraucher 100. Gleichzeitig steigt das Potential an der Basis des Transistors T3 an, was den Transistor T3 ebenfalls in den leitenden Zustand bringt. Somit sind ab dem Zeitpunkt t1 sowohl der Transistor T3 als auch der Transistor T4 leitend.

Dies hat zur Folge, daß der Basisanschluß des Transistors T2 dauerhaft auf Massepotential liegt und der Transistor T2 leitend bleibt. Ab dem Zeitpunkt t1 wird der Kondensator C5 über den Widerstand R2 und die Diode D5 aufgeladen. Dies bedeutet, die Spannung an der Basis des Transistors T5 steigt langsam an. Die Basis des Transistors T4 verbleibt auf ihrem Potential.

Zum Zeitpunkt t2 erreicht die Spannung am Kondensator C5 den Wert, bei dem der Transistor T5 in seinen leitenden Zustand übergeht. Dies hat zur Folge, daß ab dem Zeitpunkt t2 der Verbindungspunkt zwischen der Diode D3 und dem Widerstand R8 auf Massepotential liegt. Dies führt dazu, daß der Kondensator C4 über den Widerstand R4 entladen wird. Dies bedeutet, daß die Spannung BT4 an der Basis des Transistors T4 abfällt.

Zum Zeitpunkt t3 ist die Spannung an der Basis des Transistors T4 so weit abgefallen, daß der Transistor T4 in seinen gesperrten Zustand übergeht. Dies führt dazu, daß an der Basis des Transistors T2 nicht mehr Massepotential anliegt. Ist die Überspannung abgebaut, so verbleibt der Transistor T2 in seinem gesperrten Zustand und bezüglich der Transistoren T1, T2, T3 ist der Ausgangszustand wiederhergestellt. Der Kondensator C4 wird über die Diode D3 und den Widerstand R8 wieder auf Batteriespannung aufgeladen und die Spannung an der Basis des Transistors T5 bzw. am Kondensator C5 fällt auf 0 ab.

Die Überspannung wird mittels der Zenerdiode D1 sensiert und führt zum Einschalten des Transistors T2, was wiederum den Schalter T1 durchsteuert. Dies bedeutet, es sind Mittel vorgesehen, die das Schaltmittel T1 derart ansteuern, daß der Stromfluß durch den Verbraucher 100 freigegeben wird, wenn die Spannung einen Schwellwert übersteigt. Diese Mittel umfassen wenigstens ein zweites Schaltmittel T2, das einen zweiten Zustand annimmt, wenn die Spannung den Schwellwert übersteigt. Dabei steuert das zweite Schaltmittel T2 das erste Schaltmittel T1 derart an, daß es seinem leitenden Zustand annimmt.

Mittels der Reihenschaltung der Transistoren T3 und T4 wird der Transistor T2 im leitenden Zustand gehalten. Dies bedeutet, es sind Selbsthaltemittel vorgesehen, die das zweite Schaltmittel derart ansteuern, daß es in dem zweiten Zustand verbleibt. Dabei verbleibt der Transistor T3 solange im leitenden Zustand bis der Transistor T2 wieder sperrt. Der Transistor T4 leitet, bis die Spannung am RC-Glied, bestehend aus dem Kondensator C4 und dem Widerstand R4, unter einen Schwellwert abfällt. Hierdurch wird erreicht, daß die Ansteuerung der Transistoren T2 und T1 nach Ablauf einer Wartezeit zurückgenommen wird. Die Wartezeit wird durch das RC-Glied, bestehend aus dem Kondensator C4 und dem Widerstand R4, bestimmt.

Die Entladung des RC-Gliedes, bestehend aus dem Kondensator C4 und dem Widerstand R4, und damit die erste Wartezeit wird erst nach Ablauf einer zweiten Wartezeit gestartet. Diese zweite Wartezeit wird durch das RC-Glied, bestehend aus dem Kondensator C5 und dem Widerstand R5, realisiert. Gleichzeitig mit dem Durchsteuern der Transistoren T1 und T2 wird das RC-Gliedern bestehend aus dem Kondensator C5 und dem Widerstand R5 initialisiert. Erreicht die Spannung am Kondensator C5 einen bestimmten Wert, so wird der Transistor T5 leitende und initialisiert hierdurch das RC-Glied, bestehend aus dem Kondensator C4 und dem Widerstand R4. Dies bedeutet, daß wenigstens ein Zeitglied vorgesehen ist, daß nach Ablauf einer Wartezeit, das zweite Schaltmittel derart ansteuern, daß dieses seinen ersten Zustand annimmt.

Der Stromfluß durch den Verbraucher wird bei Erkennen einer Überspannung, das heißt die Spannung übersteigt einen Schwellwert, freigegeben. Die Schaltung ist dabei derart ausgebildet, daß der Stromfluß bis nach Ablauf einer Wartezeit bestehen bleibt. Diese Wartezeit wird durch wenigstens ein RC-Glied bestimmt.

Bei der zu überwachenden Spannung handelt es sich vorzugsweise um die Versorgungsspannung U eines Steuergerätes und/oder um die Spannung an einem Eingang eines Steuergeräts.

Die RC-Glieder sind so dimensioniert, daß die Wartezeit so gewählt ist, daß der Verbraucher nicht anspricht. Dies bedeutet, daß bei der Verwendung einer Pumpe, diese nicht oder nur kurz anläuft. Bei einem Magnetventil bedeutet dies, daß das Magnetventil seinen Zustand nicht ändert. Die Wartezeit ist so lange gewählt, daß der Load Dump sicher abgebaut ist. Das heißt, daß beim Öffnen des Schaltmittels T1 steigt die Spannung nicht mehr auf erhöhte Werte an.

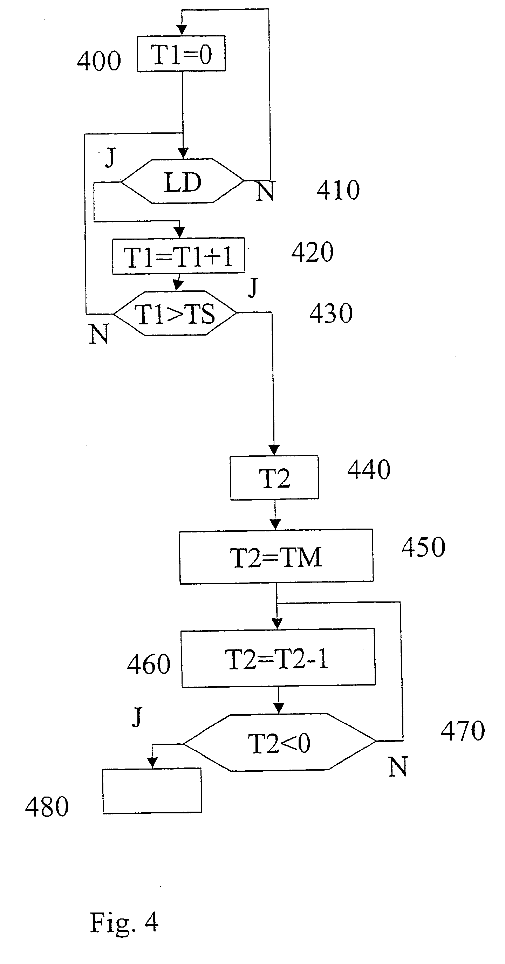

Eine weitere Ausführungsform der Erfindung ist in Figur 4 als Flußdiagramm dargestellt. In einem ersten Schritt 400 wird ein zweiter Zeitzähler T1 auf 0 gesetzt. Die anschließende Abfrage 410 überprüft, ob ein Load Dump vorliegt. Vorzugsweise überprüft die Abfrage 410, ob die zu überwachende Spannung größer als ein Schwellwert ist. Ist dies nicht der Fall, so erfolgt erneut Schritt 400.

Erkennt die Abfrage 410, daß die zu überwachende Spannung größer als der vorgegebene Schwellwert LD ist, so wird in Schritt 420 der zweite Zeitzähler erhöht. Die sich anschließende Abfrage 430 überprüft, ob der Zeitzähler T1 einen Schwellwert TS überschritten hat. Ist dies nicht der Fall, so folgt erneut die Abfrage 410. Erkennt die Abfrage 430, daß der Zeitzähler T1 den Schwellwert TS überschritten hat, so folgt Schritt 440. Der Schwellwert TS wird im folgenden auch als zweite Wartezeit bezeichnet.

Die Abfrage 430 und der zweite Zeitzähler bewirken, daß ein Load Dump erst erkannt wird, wenn die zu überwachende Spannung länger als die zweite Wartezeit TS über dem Schwellwert LD liegt. Dadurch wird erreicht, daß kurzzeitige Störimpulse nicht zum Ansprechen der Load Dump Funktion führen.

Im Schritt 440 wird der Stromfluß durch den Verbraucher initialisiert. Anschließend in Schritt 450 wird ein erster Zeitzähler T2 auf einen vorgegebenen Wert TM gesetzt. Anschließend in Schritt 460 wird der Zeitzähler inkrementiert. Die sich anschließende Abfrage 470 überprüft, ob der erste Zeitzähler T2 kleiner als Null ist. Ist dies nicht der Fall, so folgt erneut der Schritt 460. Ist der erste Zeitzähler auf 0 inkrementiert, so wird in Schritt 480 der Stromfluß durch den Verbraucher unterbunden.

Die Abfrage 470 und der erste Zeitzähler bewirken, daß bei einem erkannten Load Dump der Verbraucher für eine vorbestimmte erste Wartezeit TM bestromt wird, um die Überspannung sicher abzubauen.

Der Load Dump wird erst erkannt, wenn die Spannung für eine bestimmte zweite Wartezeit T1 größer als ein Schwellwert ist. Bei einem erkannten Load Dump erfolgt die Ansteuerung des Verbraucher für die erste Wartezeit T2 unabhängig davon, welchen Wert die überwachte Spannung annimmt.

Durch diese Vorgehensweise kann ein mehrmaliges hin- und her- schalten in die Load Dump Funktion vermieden werden.

Besonders vorteilhaft ist es wenn die Zeitzähler T1 und T2 als RC-Glieder realisiert sind. Besonders vorteilhaft ist es dabei, daß lediglich ein Kondensator für beide RC-Glieder verwendet wird. Auf das Beispiel der Figur 2 übertragen, ist dies derart realisiert, daß die Elemente T5, R5 und C5 weggelassen werden. Bei einem Load Dump lädt sich der Kondensator C4 des ersten Zeitgliedes über die überwachte Spannung und den Widerstand R8 und die Diode D3 auf. Die zweite Wartezeit TS wird durch die Werte des RC-Gliedes, bestehend aus dem Widerstand R8 und dem Kondensator C4, bestimmt.

Die erste Wartezeit TM, für die der Verbraucher bestromt wird, ist durch den Kondensator C4 und den Widerstand R4 bestimmt. Der Verbraucher wird solange bestromt, bis sich der Kondensator über den Widerstand R4 entladen hat.

Vorzugsweise ist vorgesehen, daß die Abfragen und die Überwachung der Spannung durch einen integrierten Baustein oder einen Logikbaustein realisiert sind. Der Kondensator der Zeitglieder ist vorzugsweise außerhalb des Baustein angeordnet.

## Patentansprüche

1. Verfahren zum Abbau von Überspannungen, wobei ein erstes Schaltmittel und ein Verbraucher in Reihe zwischen einem ersten und einem zweiten Anschluß einer Spannungsquelle geschaltet sind, das erste Schaltmittel derart angesteuert wird, daß der Stromfluß durch den Verbraucher freigegeben wird, wenn die an der Spannungsquelle anliegende Spannung einen Schwellwert übersteigt, **dadurch gekennzeichnet, daß** der Stromfluß durch den Verbraucher nach Ablauf einer ersten Wartezeit unterbunden wird.

2. Verfahren nach Anspruch 1, **dadurch gekennzeichnet, daß** die Wartezeit so gewählt ist, daß der Verbraucher nicht anspricht.

3. Verfahren nach Anspruch 1 oder 2, **dadurch gekennzeichnet, daß** die erste Wartezeit erst nach Ablauf einer zweiten Wartezeit beginnt abzulaufen.

4. Vorrichtung zum Abbau von Überspannungen, wobei ein Schaltmittel und ein Verbraucher in Reihe zwischen einem ersten und einem zweiten Anschluß einer Spannungsquelle geschaltet sind, wobei Mittel vorgesehen sind, die das Schaltmittel derart ansteuern, daß der Stromfluß durch den Verbraucher freigegeben wird, wenn die an der Spannungsquelle anliegende Spannung einen Schwellwert übersteigt, **dadurch gekennzeichnet, daß** ein erstes Zeitglied den Stromfluß durch den Verbraucher nach Ablauf einer ersten Wartezeit unterbindet.

5. Vorrichtung Anspruch 4, **dadurch gekennzeichnet, daß** ein zweites Zeitglied nach Ablauf einer zweiten Wartezeit die erste Wartezeit startet.

6. Vorrichtung nach Anspruch 4 oder 5, **dadurch gekennzeichnet, daß** der Verbraucher als Pumpe, insbesondere als Hydraulikpumpe eines die Bremswirkung eines Kraftfahrzeugs beeinflussenden Systems ausgebildet ist.

7. Vorrichtung nach einem der Ansprüche 4 bis 6, **dadurch gekennzeichnet, daß** die Mittel wenigstens ein zweites Schaltmittel umfassen, das einen zweiten Zustand annimmt, wenn die Spannung einen Schwellwert übersteigt, und damit erste Schaltmittel derart ansteuern, daß dieses seinem leitenden Zustand annimmt.

8. Vorrichtung nach Anspruch 7, **dadurch gekennzeichnet, daß** Selbsthaltemittel vorgesehen sind, die das zweite Schaltmittel derart ansteuern, daß es in dem zweiten Zustand verbleibt.

## Claims

1. Method for suppressing overvoltages, a first switching means and a load being connected in series between a first and a second connection of a voltage source, the first switching means being driven in such a manner that the flow of current through the load is enabled if the voltage applied to the voltage source exceeds a threshold value, **characterized in that** the flow of current through the load is prevented after a first waiting time has elapsed.

2. Method according to Claim 1, **characterized in that** the waiting time is selected in such a manner that the load does not respond.

3. Method according to Claim 1 or 2, **characterized in that** the first waiting time begins to elapse only after a second waiting time has elapsed.

4. Device for suppressing overvoltages, a switching means and a load being connected in series between a first and a second connection of a voltage source, provision being made of means which drive the switching means in such a manner that the flow of current through the load is enabled if the voltage applied to the voltage source exceeds a threshold value, **characterized in that** a first timer prevents the flow of current through the load after a first waiting time has elapsed.

5. Device according to Claim 4, **characterized in that** a second timer starts the first waiting time after a second waiting time has elapsed.

6. Device according to Claim 4 or 5, **characterized in that** the load is in the form of a pump, in particular in the form of a hydraulic pump of a system that influences the braking action of a motor vehicle.

7. Device according to one of Claims 4 to 6, **characterized in that** the means comprise at least one second switching means, which assumes a second state if the voltage exceeds a threshold value, and use them to drive first switching means in such a manner that the latter assumes its on state.

8. Device according to Claim 7, **characterized in that** provision is made of self-locking means which drive the second switching means in such a manner that it remains in the second state.

## Revendications

1. Procédé pour supprimer les surtensions, selon lequel, un premier moyen de commutation et un consommateur sont branchés en série entre une première et une seconde borne d'une source de tension, le premier moyen de commutation étant commandé pour libérer le passage du courant à travers le consommateur si la tension appliquée à la source de tension dépasse un seuil,
**caractérisé en ce que**
le passage du courant à travers le consommateur est coupé à la fin d'un premier temps d'attente.

2. Procédé selon la revendication 1,
**caractérisé en ce que**
le temps d'attente est choisi pour que le consommateur ne soit pas sollicité.

3. Procédé selon la revendication 1 ou 2,
**caractérisé en ce que**
le premier temps d'attente commence seulement à s'écouler après la fin d'un second temps d'attente.

4. Dispositif de suppression des surtensions, comprenant un moyen de commutation et un consommateur branchés en série entre une première et une seconde borne d'une source de tension,
des moyens étant prévus pour commander le moyen de commutation de façon à libérer le passage du courant à travers le consommateur si la tension appliquée à la source de tension dépasse un seuil,
**caractérisé par**
un premier élément de temporisation qui interdit le passage du courant à travers le consommateur à la fin d'un premier temps d'attente.

5. Dispositif selon la revendication 4,
**caractérisé en ce qu'**
un second élément de temporisation démarre le premier temps d'attente après un second temps d'attente.

6. Dispositif selon la revendication 4 ou 5,
**caractérisé en ce que**
le consommateur est une pompe, notamment une pompe hydraulique, d'un système influençant l'effet de freinage d'un véhicule automobile.

7. Dispositif selon l'une des revendications 4 à 6,
**caractérisé en ce que**
les moyens comprennent au moins un second moyen de commutation qui prend un second état si la tension dépasse un seuil et commande ainsi le premier moyen de commutation pour que celui-ci passe à l'état conducteur.

8. Dispositif selon la revendication 7,
**caractérisé par**
des moyens de retenue automatique qui commandent le second moyen de commutation de façon qu'il reste dans son second état.
